(19) Europäisches Patentamt
European Patent Office
Office européen des brevets

(11) **EP 2 549 434 B1**

(12) **FASCICULE DE BREVET EUROPEEN**

(45) Date de publication et mention
de la délivrance du brevet:
**17.10.2018 Bulletin 2018/42**

(51) Int Cl.:
**G06T 7/00** *(2017.01)*          **G06T 17/05** *(2011.01)*
G06K 9/00 *(2006.01)*          G06T 19/00 *(2011.01)*

(21) Numéro de dépôt: **12177362.6**

(22) Date de dépôt: **20.07.2012**

(54) **Procédé de modélisation de bâtiments à partir d'une image géoréférencée**

Verfahren zur Modellkonstruktion von Gebäuden auf der Grundlage eines Georeferenzbildes

Method of modelling buildings from a georeferenced image

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.07.2011 FR 1102288**
**22.07.2011 FR 1102289**

(43) Date de publication de la demande:
**23.01.2013 Bulletin 2013/04**

(73) Titulaire: **Thales**
**92400 Courbevoie (FR)**

(72) Inventeurs:
• **Louis, Christian**
**78141 VELIZY Cedex (FR)**
• **Reynaud, Sébastien**
**78141 VELIZY Cedex (FR)**
• **Barthelet, Edouard**
**78141 VELIZY Cedex (FR)**

(74) Mandataire: **Labatte, Laurent**
**Marks & Clerk France**
**Immeuble Visium**
**22, avenue Aristide Briand**
**94117 Arcueil Cedex (FR)**

(56) Documents cités:
**EP-A1- 1 998 139**

• **BRUNNER DOMINIK ET AL: "Earthquake Damage Assessment of Buildings Using VHR Optical and SAR Imagery", IEEE TRANSACTIONS ON GEOSCIENCE AND REMOTE SENSING, IEEE SERVICE CENTER, PISCATAWAY, NJ, US, vol. 48, no. 5, 1 mai 2010 (2010-05-01), pages 2403-2420, XP011302719, ISSN: 0196-2892**
• **BRUNNER DOMINIK ET AL: "Building Height Retrieval From VHR SAR Imagery Based on an Iterative Simulation and Matching Technique", IEEE TRANSACTIONS ON GEOSCIENCE AND REMOTE SENSING, IEEE SERVICE CENTER, PISCATAWAY, NJ, US, vol. 48, no. 3, 1 mars 2010 (2010-03-01), pages 1487-1504, XP011297498, ISSN: 0196-2892**
• **LAFARGE FLORENT ET AL: "Structural Approach for Building Reconstruction from a Single DSM", IEEE TRANSACTIONS ON PATTERN ANALYSIS AND MACHINE INTELLIGENCE, IEEE SERVICE CENTER, LOS ALAMITOS, CA, US, vol. 30, no. 1, 1 janvier 2010 (2010-01-01), pages 135-147, XP011292928, ISSN: 0162-8828**
• **Sportouche Hélène: "Extraction et reconstruction des bâtiments en milieu urbain à partir d'images satellitaires optiques et radar à haute résolution" In: "thèse de doctorat", 10 décembre 2010 (2010-12-10), Télécom ParisTech, XP055018716, pages 1-196, \* page 41 - page 49 \* \* page 55, alinéa 2 \* \* page 59, alinéa 1 - page 67, dernier alinéa \* \* page 69, alinéa 2 - page 82, alinéa 2 \* \* page 87, alinéa 2 - page 95, alinéa 1 \* \* Chapitre 6 - "Estimation des hauteurs et validation des bâtiments"; page 125 - page 143 \* \* Chapitre 8 - "Extensions"; page 163 - page 178 \***

EP 2 549 434 B1

- HELENE SPORTOUCHE ET AL: "A Processing Chain for Simple 3D Reconstruction of Buildings in Urban Scenes From High Resolution Optical and SAR Images", 8TH EUROPEAN CONFERENCE ON SYNTHETIC APERTURE RADAR, 7 juin 2010 (2010-06-07), pages 1-4, XP055115189, Aachen, Germany ISBN: 978-3-80-073272-2
- LU WANG ET AL: "A robust approach for automatic registration of aerial images with untextured aerial LiDAR data", 2009 IEEE CONFERENCE ON COMPUTER VISION AND PATTERN RECOGNITION : CVPR 2009 ; MIAMI [BEACH], FLORIDA, USA, 20 - 25 JUNE 2009, IEEE, PISCATAWAY, NJ, 20 juin 2009 (2009-06-20), pages 2623-2630, XP031607127, ISBN: 978-1-4244-3992-8
- ALI M A ET AL: "Automatic registration of SAR and visible band remote sensing images", IGARSS 2002. IEEE 2002 INTERNATIONAL GEOSCIENCE AND REMOTE SENSING SYMPOSIUM. TORONTO, SWEDEN, JUNE 24 -28, 2002; [IEEE INTERNATIONAL GEOSCIENCE AND REMOTE SENSING SYMPOSIUM], NEW YORK, NY : IEEE, US, vol. 3, 24 juin 2002 (2002-06-24), pages 1331-1333, XP010598209, ISBN: 978-0-7803-7536-9
- ALEXANDER WONG ET AL: "ARRSI: Automatic Registration of Remote-Sensing Images", IEEE TRANSACTIONS ON GEOSCIENCE AND REMOTE SENSING, IEEE SERVICE CENTER, PISCATAWAY, NJ, US, vol. 45, no. 5, 1 mai 2007 (2007-05-01), pages 1483-1493, XP011177318, ISSN: 0196-2892, DOI: 10.1109/TGRS.2007.892601
- DOWMAN I J ET AL: "Automatic registration of images with maps using polygonal features", CONGRESS / INTERNATIONAL SOCIETY FOR PHOTOGRAMMETRY AND REMOTE SENSING ; 18; [INTERNATIONAL ARCHIVES OF PHOTOGRAMMETRY AND REMOTE SENSING ; 31,B3], AUSTRIAN SOCIETY OF SURVEYING AND GEOINFORMATION, VIENNA, vol. XXXI, no. B3, 1 janvier 1996 (1996-01-01), pages 139-145, XP002669199,

**Description**

La présente invention concerne un procédé de modélisation d'objets réels, en particulier de bâtiments, à partir d'une image référencée géographiquement. Elle s'applique notamment à la télédétection, la géographie numérique, à la constitution de bases de données 3D urbaines ou leur mise à jour.

L'élaboration d'une base de données 3D pour modéliser une zone urbaine implique généralement une phase d'extraction manuelle ou automatique du bâti à partir d'une ou de plusieurs images aériennes ou spatiales de la zone à modéliser. Les images utilisées pour cette modélisation peuvent être issues de divers capteurs d'observation : un appareil photographique classique, un capteur d'image embarqué sur un aéronef ou un satellite d'observation. En outre, le domaine spectral de prise de vue peut varier : domaine de la lumière visible, infrarouge, multispectral ou hyperspectral, radar, lidar, par exemple. De plus, les images sont référencées géographiquement, autrement dit géoréférencées, c'est-à-dire qu'elles sont associées à des métadonnées comprenant une fonction de correspondance entre la surface terrestre observée, espace désigné par l'expression « espace terrain » et les pixels de l'image, espace désigné par l'expression « espace image ». Cette fonction, notée $f_{\theta 1},...,_{\theta n}(X,Y,Z)$, est une traduction des caractéristiques physiques du capteur utilisé pour la prise de vue ; elle fait ainsi correspondre aux coordonnées géographiques de tout point de la zone observée, un pixel de l'image. En d'autres termes, c'est un modèle paramétrique dont les paramètres $\theta_1,...,\theta_n$ comprennent au moins les caractéristiques physiques du capteur (taille de matrices réceptrices, distance focale si pertinente, ...) et la position et l'orientation du capteur au moment de la prise de vue : on appelle alors cette fonction un modèle physique de la prise de vue. Ces types de modèle sont par exemple :

- le modèle conique représentant la prise de vue classique d'un appareil photo à plan focal : il correspond à une matrice de récepteurs (CCD pour Charge-Coupled Device, ou CMOS pour Complementary metal oxide semi-conductor) ;
- le modèle « pushbroom » où les récepteurs sont organisés le long d'une barrette unidimensionnelle ;
- le modèle « Whiskbroom » où le récepteur est réduit à une cellule dont le mouvement rapide permet de former une image ;
- le modèle « SAR » (Synthetic Aperture Radar) issu d'un post-traitement mathématique par le processeur SAR des réflexions électromagnétiques d'un signal radar incident dans une bande de fréquence donnée.

Dans d'autres cas, cette fonction peut se résumer à une fonction mathématique très générale ayant la plupart du temps des propriétés d'approximateur universel dont les paramètres n'ont pas de signification physique particulière. On parle alors de modèle de remplacement. Des exemples répandus de ces types de modèle sont :

- Les modèles polynôme,
- Les modèles RPCs qui sont des quotients de polynômes (Rational Polynom Coefficients)
- Les modèles « grille » où la fonction est linéaire par morceaux par interpolation des valeurs aux noeuds d'une grille.

On peut séparer les méthodes d'extraction des bâtiments en deux grandes catégories : la technique de stéréoscopie, dans laquelle plusieurs images géoréférencées issues de points de vue différents sont utilisées conjointement pour extraire le relief, et la technique de monoscopie, qui s'appuie, d'une part, sur une seule image affectée d'un angle de parallaxe permettant de reconstituer la hauteur des objets représentés, et d'autre part sur la donnée d'altitude de l'objet considéré, généralement fournie par un modèle M de la surface terrestre qui contient, pour tout point P du terrain, la coordonnée altimétrique Z en fonction des coordonnées planimétriques X et Y. Il s'exprime de la manière suivante : $Z = M(X,Y)$, où Z est la coordonnée altimétrique d'un point P du terrain ; et X et Y sont les coordonnées planimétriques de ce point P. Le modèle M de la surface terrestre est par exemple un modèle numérique de surface (MNS) ou un modèle numérique d'élévation (MNE), ces deux modèles donnant des informations de relief relatives au sursol. En variante, il s'agit d'un modèle numérique de terrain (MNT) qui donne des informations de relief relatives au sol nu.

L'extraction en monoscopie peut être réalisée manuellement, automatiquement ou selon une combinaison d'actions manuelles et de procédés automatisés. Lorsque l'extraction est manuelle, des moyens d'affichage, par exemple un écran, sont utilisés pour permettre à un opérateur de saisir directement sur ces moyens d'affichage les bâtiments à l'aide d'une souris ou de moyens similaires. En règle générale, cette saisie permet d'obtenir des modèles de bonne qualité sur des images optiques, mais elle s'avère fastidieuse et coûteuse. De plus, certains types d'images comme les images de type SAR (acronyme anglo-saxon pour « Synthetic Aperture Radar » ou radar à synthèse d'ouverture) sont très difficiles à interpréter pour un opérateur humain, ce qui complique la saisie des bâtiments, nécessite des opérateurs formés spécifiquement à ce type d'image, et augmente en conséquence les coûts de modélisation.

Certaines techniques automatiques ont été proposées pour accélérer l'extraction. On peut citer notamment la méthode décrite dans le brevet américain publié sous le numéro US7733342. Cette méthode exploite les ombres portées des bâtiments pour en déduire leur hauteur. Toutefois, cette méthode comporte plusieurs limites. D'une part, elle permet de ne déterminer que la hauteur d'un bâtiment, et ne résout donc pas le problème de la détermination de son emprise au sol. D'autre part, cette méthode est tributaire des conditions de prise de vue et notamment de la présence d'un éclairement suffisant pour créer des ombres. De plus, elle ne fonctionne qu'avec des images optiques, et ne permet donc pas d'extraction à partir des images de type SAR.

D'autres techniques sont basées sur l'extraction préalable de primitives élémentaires telles que des segments. Une fois qu'un ensemble de segments a été constitué, des algorithmes de reconstitution des objets sont exécutés pour associer les segments entre eux et ainsi former les bâtiments. Cependant, ces techniques sont sujettes à de nombreuses erreurs, notamment à cause des imperfections dans les détections de contours. Elles nécessitent un paramétrage complexe impliquant de nombreux seuils à fixer préalablement à l'exécution de l'algorithme. En outre, un jeu de paramètres aboutissant à des résultats satisfaisant pour une image donnée peut s'avérer totalement inadapté à d'autres images ; ce problème est encore accru pour les images de type SAR. Par conséquent, ces algorithmes à base de segmentation manquent de robustesse.

Une méthode divulguée par Dominik Brunner et al., intitulée « Earthquake Damage Assessment of Buildings Using VHR Optical and SAR Imagery », et publiée dans IEEE Geoscience and Remote Sensing Society, vol. 48, no.5, mai 2010, propose d'extraire des bâtiments d'une image SAR. Elle permet de déterminer la hauteur du bâtiment en exploitant à la fois l'image SAR et un modèle de bâtiment déjà connu. Cette méthode ne permet pas de déterminer automatiquement tous les paramètres caractérisant un bâtiment dans l'image, mais seulement un seul paramètre (la hauteur) à partir d'un premier modèle déjà extrait préalablement. Par ailleurs, une méthode divulguée par Hélène Sportouche et al, intitulée "A Processing Chain for Simple 3D Reconstruction of Buildings in Urban Scenes From High Resolution Optical and SAR Images", et publiée dans "8th European Conférence on Synthetic Aperture Radar", 7 juin 2010, propose l'extraction semi automatique des bâtiments d'une scène réelle à partir d'une image SAR et d'une image optique correspondante, au moyen d'un modèle de bâtiment parallélépipédique.

L'objet de l'invention et ses différentes mises en oeuvre sont définis par les revendications 1 à 12.

Un but de l'invention est de proposer une méthode robuste et au moins partiellement automatisée d'extraction monoscopique d'un ou de plusieurs objets présents sur la surface terrestre et compris dans une image issue d'une prise de vue par un capteur aérien ou spatial. A cet effet, l'invention a pour objet un procédé de d'extraction monoscopique d'un objet réel représenté dans une image de la surface terrestre selon la revendication 1.

Le procédé selon l'invention permet de déterminer conjointement tous les paramètres descriptifs de l'objet en un temps raisonnable, grâce en particulier à la combinaison entre l'application d'une méthode d'optimisation à partir d'un jeu de paramètres choisi parmi une pluralité de jeux de paramètres initialisés par exemple aléatoirement. Ainsi, le procédé selon l'invention exploite une double itération, la première itération fixant un jeu initial de paramètres utilisé comme point de départ par la méthode d'optimisation, laquelle participe à une deuxième itération pour déterminer au plus vite le jeu local optimal de paramètres.

Contrairement aux méthodes classiques qui tentent de reconstituer des objets, par exemple des bâtiments, à partir de l'extraction de primitives de bas niveau telles que des segments par exemple, le procédé selon l'invention procède selon un mode hypothèse-réfutation en partant de primitives de haut niveau, c'est-à-dire de modèles représentant des objets réels tels que des bâtiments. Le procédé selon l'invention permet ainsi de limiter les erreurs souvent rencontrées dans les méthodes classiques, sujettes au bruit, à la nature de l'image, aux caractéristiques radiométriques de l'image elle-même, et au paramétrage de la méthode. Le procédé selon l'invention ne requiert pas la définition d'une multitude de seuils, particulièrement difficile à ajuster, et dont les valeurs optimales dépendent généralement de l'image à traiter.

Selon une mise en oeuvre du procédé selon l'invention, tant que les paramètres correspondant à la meilleure adéquation entre le modèle projeté et l'image n'ont pas été déterminés, on modifie les paramètres, on projette le modèle paramétré dans l'espace image, et on réévalue l'adéquation entre le modèle projeté et les caractéristiques radiométriques de l'image. Le premier jeu de paramètres testé peut être tiré aléatoirement.

Selon une mise en oeuvre du procédé selon l'invention, chacun des paramètres est tiré aléatoirement selon une loi uniforme dans son domaine de définition.

L'application d'un tirage aléatoire pour choisir un jeu initial de paramètres permet de couvrir l'ensemble du domaine de définition et éviter ainsi de modéliser l'objet à partir d'un jeu de paramètre correspondant seulement à un optimum local.

Selon une mise en oeuvre du procédé selon l'invention, lors de l'étape d'évaluation de l'adéquation entre le modèle projeté et l'image, on évalue l'homogénéité radiométrique des zones correspondant aux faces du modèle projeté dans l'image. Cette étape permet de tenir compte du fait qu'en règle générale, une face de bâtiment vue d'un capteur aérien ou spatial est relativement homogène et se différentie radiométriquement des autres faces de ce bâtiment.

Selon une mise en oeuvre du procédé selon l'invention, lors de l'étape d'évaluation de l'adéquation entre le modèle projeté et l'image, on évalue l'adéquation des contours du modèle projeté dans l'image avec les transitions radiométriques de l'image. Cette étape permet d'exploiter le caractère relativement précis de la représentation des contours de bâtiments dans l'image.

Selon une mise en oeuvre du procédé selon l'invention, dans un premier temps, on modifie les paramètres initiaux jusqu'à obtenir une adéquation optimale entre l'homogénéité radiométrique des zones correspondant aux faces du modèle projeté dans l'image, et dans un deuxième temps, on modifie les paramètres conduisant à ladite adéquation optimale d'homogénéité radiométrique jusqu'à obtenir une adéquation optimale des contours du modèle projeté dans l'image avec les transitions radiométriques de l'image. Cette méthode en deux temps permet de s'approcher approximativement du jeu de paramètre optimal en utilisant le critère d'homogénéité radiométrique, moins précis, mais plus lisse, puis de déterminer avec précision les paramètres optimaux en utilisant le critère fondé sur les contours, plus irrégulier, mais plus précis. Avantageusement, les critères d'évaluation de l'adéquation entre le modèle projeté et l'image sont choisis en fonction du type de capteur utilisé pour produire l'image. L'adaptation des critères d'appariement aux différents types d'image, permet d'appliquer le procédé indifféremment sur tous les types d'images pour lesquels des critères ont été préalablement définis. Avantageusement, l'objet réel à modéliser est un bâtiment, les paramètres de modélisation comprenant au moins un paramètre parmi les suivants : la longueur du bâtiment, la largeur du bâtiment, la hauteur du bâtiment, la longitude du centre de gravité de l'emprise au sol du bâtiment, la latitude du centre de gravité de l'emprise au sol du bâtiment, l'angle azimut d'orientation du bâtiment par rapport au nord géographique. Chacun de ces paramètres est associé à un domaine de définition qui lui est propre. Avantageusement, l'altitude du modèle de l'objet réel à projeter est, avant l'étape de projection, considérée comme étant au niveau d'un modèle numérique du terrain correspondant à la zone géographique observée dans l'image. Cette contrainte permet de prédéterminer la composante d'altitude. Avantageusement, l'image est issue d'un capteur optique, l'instant auquel l'image a été prise étant connu,

- on modélise la forme de l'ombre produite par le modèle paramétré de l'objet réel,
- on projette l'ombre de ce modèle dans l'image en utilisant des données d'éphéméride correspondant à l'instant auquel l'image a été prise,
- on évalue l'adéquation de l'ombre avec les caractéristiques radiométriques de l'image.

L'invention a également pour objet un procédé d'extraction monoscopique de plusieurs objets réels représentés dans une image selon la revendication 4.

Selon une mise en oeuvre du procédé selon l'invention, le procédé étant mis en oeuvre par un logiciel exécuté sur un système de calcul pourvu de moyens d'affichage et d'interaction avec un utilisateur, dans lequel, après l'étape de choix du modèle paramétrique telle que décrite plus haut, un utilisateur définit en utilisant les moyens d'interaction, un domaine de définition pour un sous-ensemble de paramètres, avant d'exécuter les étapes de projection, d'évaluation de l'adéquation entre le modèle projeté et l'image, et de détermination des paramètres optimaux sur le domaine de définition défini précédemment par l'utilisateur.

L'invention a également pour objet un procédé de détection de changements entre deux images d'une même zone géographique prise à deux instants différents, le procédé comprenant une première étape d'exécution du procédé d'extraction monoscopique sur chacune des deux images, et une deuxième étape de comparaison des modèles obtenus à l'issue de la première étape.

L'invention a également pour objet un système d'extraction monoscopique d'un objet réel représenté dans une image de la surface terrestre, l'image étant référencée géographiquement et produite par un capteur aérien ou spatial, caractérisé en ce que le système comprend au moins une machine de calcul configurée pour exécuter le procédé d'extraction tel que décrit plus haut.

L'invention a également pour objet un procédé d'extraction d'au moins un groupe de N points homologues à partir de N images aériennes ou spatiales selon la revendication 8. Avantageusement, la modélisation de la surface externe des objets réels sur une image est effectuée indépendamment des autres images. Le ou les points choisis dans chacun des modèles sont de préférence pris sur la surface modélisée. Avant de choisir ces points, les modèles peuvent être mis en correspondance entre eux ; par exemple, cette correspondance peut être déterminée en considérant la transformation minimale à effectuer pour passer d'un modèle à l'autre. Contrairement aux méthodes classiquement utilisées dans l'art antérieur, le procédé selon l'invention n'utilise pas des primitives de bas niveau, telles que des points ou des segments, pour effectuer des appariements. Il s'appuie sur des primitives plus complexes, limitant ainsi le risque d'appariements erronés entre deux objets ne correspondant pas à un même objet du terrain.

Une comparaison entre images est évitée, ce qui permet notamment d'éviter l'écueil des comparaisons entre images de natures différentes, comparaisons qui sont vouées à l'échec.

Selon une mise en oeuvre du procédé d'extraction de points homologues selon l'invention, la surface externe des objets est modélisée en trois dimensions au moyen d'arrêtes et de sommets, pour chacun desdits Q objets issus de l'étape de sélection des objets, on choisit les points homologues parmi lesdits sommets.

Selon une mise en oeuvre du procédé d'extraction de points homologues selon l'invention, un premier modèle de l'un des objets réels modélisés étant généré à partir d'une première image, un deuxième modèle de ce même objet étant généré à partir d'une deuxième image, une étape de mise en correspondance des sommets de chacun des deux modèles est exécutée préalablement à l'étape de choix des points homologues. Avantageusement, les objets réels modélisés sont des bâtiments, on modélise chacun des bâtiments par un polygone extrudé selon l'axe des altitudes.

Avantageusement, les points homologues peuvent être choisis parmi les sommets du polygone supérieur modélisant le toit du bâtiment. Avantageusement, un premier modèle de l'un des objets réels modélisés est généré à partir d'une première image, un deuxième modèle de ce même objet étant généré à partir d'une deuxième image, la distance entre ces deux modèles, utilisée par l'étape de sélection des objets, est déterminée au moins en fonction de la similitude entre le polygone à la base de l'extrusion du premier modèle et le polygone à la base de l'extrusion du deuxième modèle. Avantageusement, l'étape de modélisation des objets est effectuée, pour au moins une image, et pour au moins un objet, manuellement par un opérateur au moyen d'une saisie par pointeur sur des moyens d'affichage.

L'invention a également pour objet un procédé de correction de modèles de prise de vue associés à des images, dans lequel chaque image est produite par un capteur aérien ou spatial associé à un modèle physique de prise de vue, le procédé comprenant l'exécution du procédé d'extraction de points homologues tel que décrit plus haut, puis une étape de correction desdits modèles de prise de vue en fonction des groupes de points homologues extraits.

L'invention a également pour objet un système de recalage d'images, caractérisé en ce qu'il comprend une machine de calcul configurée pour exécuter le procédé d'extraction de points homologues tel que décrit plus haut. Le procédé peut par exemple être mis en oeuvre par un logiciel exécuté sur un ordinateur.

D'autres caractéristiques apparaîtront à la lecture de la description détaillée donnée à titre d'exemple et non limitative qui suit faite en regard de dessins annexés qui représentent :

- la figure 1, un schéma illustrant les étapes d'une première mise en oeuvre du procédé de modélisation selon l'invention ;
- la figure 2, un schéma illustrant les étapes d'une deuxième mise en oeuvre du procédé de modélisation selon l'invention ;
- la figure 3, un schéma illustrant les étapes d'une troisième mise en oeuvre du procédé de modélisation selon l'invention ;
- la figure 4, un schéma illustrant les étapes d'un procédé de détection de changement selon l'invention ;
- la figure 5a, un graphique montrant l'évolution de la valeur des critères d'adéquation en fonction d'un paramètre du modèle de bâtiment, pour une image optique ;
- la figure 5b, un graphique montrant l'évolution de la valeur des critères d'adéquation en fonction d'un paramètre du modèle de bâtiment, pour une image SAR ;
- la figure 6, un schéma représentant un exemple de modèle de bâtiment utilisé par le procédé d'extraction de points homologues selon l'invention ;
- la figure 7, un schéma présentant les étapes d'un procédé d'extraction de points homologues selon l'invention.

Les exemples présentés par la suite sont appliqués à la modélisation de bâtiments, mais le procédé selon l'invention peut être appliqué à la modélisation de tout objet réel dont les dimensions sont suffisamment importantes pour apparaître sur l'image.

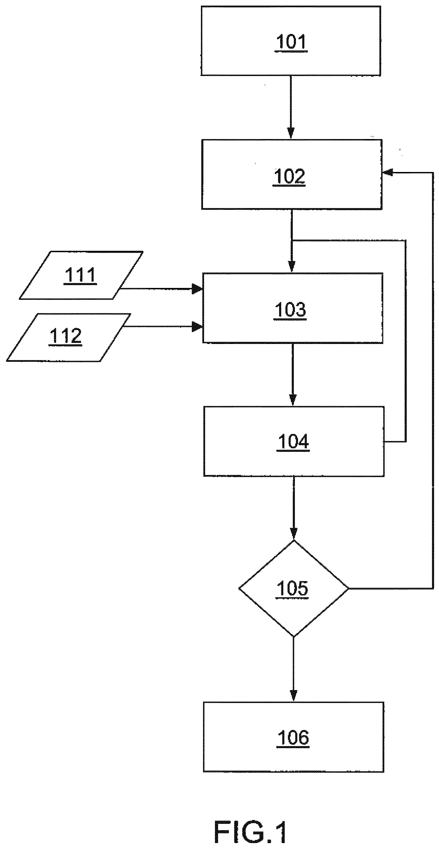

La figure 1 illustre les étapes d'une première mise en oeuvre du procédé de modélisation selon l'invention. Le procédé est exécuté sur une image géoréférencée issue d'un capteur embarqué sur un aéronef ou un satellite. Le modèle de prise de vue de l'image géoréférencée peut être représenté par une fonction paramétrée, notée $f_{\theta 1,...,\theta n}(X,Y,Z)$, faisant correspondre une coordonnée 3D de l'espace terrain avec une coordonnée 2D sur l'image:

$$f_{(\theta_1,...,\theta_n)}(X_{terrain}, Y_{terrain}, Z_{terrain}) = (colonne_{image}, ligne_{image})$$

où les paramètres $\theta_1, ..., \theta_n$ dépendent des caractéristiques physiques du capteur.

Le procédé ne peut être exécuté que si l'image n'est pas orthorectifiée, autrement dit, si la fonction f vérifie que $\dfrac{\partial f_{(\theta_1,...,\theta_n)}}{\partial Z}$ n'est pas identiquement nulle.

Le procédé peut être exécuté sur une machine de calcul tel qu'un ordinateur.

Selon une première étape 101, en prenant l'hypothèse que l'on recherche un bâtiment dont la forme approximative est connue, un modèle paramétrique de bâtiment est choisi. Ce modèle correspond à un ensemble de N paramètres permettant de définir la surface externe du bâtiment recherché. Cet ensemble de paramètres - dont les valeurs sont à déterminer par le procédé selon l'invention - définit ainsi un ensemble de bâtiments « virtuels » dont on cherche à déterminer s'ils sont réellement présents dans l'image.

Par exemple la surface externe d'un bâtiment de forme parallélépipédique peut être défini par les paramètres suivants : la latitude du centre de gravité de l'emprise au sol du bâtiment, la longitude du centre de gravité de l'emprise au sol du bâtiment, l'angle d'orientation du bâtiment par rapport au nord géographique, la largeur du bâtiment, la longueur du bâtiment, la hauteur du bâtiment. Un autre jeu de paramètres sera utilisé pour définir les bâtiments pourvus d'un toit à deux pans par exemple. Dans l'exemple, l'altitude du bâtiment est connue à l'avance car il est considéré que l'on dispose d'un modèle numérique de terrain (MNT) sur la zone de modélisation. Le bâtiment est ainsi réputé construit à l'altitude correspondant au niveau du MNT aux latitude et longitude considérées. Le procédé selon l'invention permet de déterminer la valeur de chacun de ces paramètres.

Selon une deuxième étape 102, les paramètres sont fixés à certaines valeurs. Autrement dit, une hypothèse de bâtiment est choisie. Chaque paramètre peut prendre une valeur dans une plage prédéfinie (domaine de définition). Par exemple, la latitude et la longitude sont restreintes à la zone géographique dans laquelle le bâtiment est recherché. Ainsi, lors de la deuxième étape 102, la valeur de chaque paramètre est choisie dans son domaine de définition, lequel est préalablement établi, de préférence en fonction de connaissances a priori du terrain. Dans les cas où la valeur d'un paramètre est déjà connue, le domaine de définition correspondant à ce paramètre est restreint à cette seule valeur. Cela permet de réduire l'espace des possibilités et ainsi de converger plus rapidement vers les hypothèses justes.

Dans le cas particulier où tous les paramètres du modèle de bâtiment sont fixés, l'exécution du procédé revient à effectuer un test pour déterminer si un bâtiment dont la forme est connue à l'avance est bien présent dans l'image à l'endroit prévu.

Avantageusement, une méthode stochastique est appliquée : des candidats possibles sont choisis au hasard parmi tous les bâtiments admissibles en choisissant les paramètres selon une loi uniforme dans leur domaine de définition. Aussi, lors de la deuxième étape 102, un tirage aléatoire est effectué selon des lois uniformes des paramètres du modèle de bâtiment recherché. Comme expliqué plus loin lors de la quatrième étape 104, ce tirage aléatoire fait partie d'une heuristique visant à restreindre l'espace des hypothèses de bâtiment à tester.

Ensuite, lors des exécutions ultérieures de la deuxième étape 102, ces paramètres sont localement optimisés en fonction de critères d'adéquation de l'hypothèse à l'image (cf. quatrième étape 104).

Dans une troisième étape 103, l'hypothèse de bâtiment choisie lors de la deuxième étape 102 est projetée dans l'espace image 111 en appliquant la fonction de transformation $f_{\theta 1,...,\theta n}$ propre au capteur de prise de vue 112. Autrement dit, les coordonnées image de l'hypothèse de bâtiment sont calculées. Cette opération permet de « dessiner » dans l'image le bâtiment comme s'il avait été imagé par le capteur s'il avait été effectivement présent sur le terrain au moment de la prise de l'image. La projection du modèle 3D est effectuée de telle sorte que les faces cachées du bâtiment sont éliminées, les différentes régions correspondant aux faces du bâtiment et à son ombre sont étiquetées (par exemple les zones correspondant au toit, aux murs sont différenciées), et les « bords » de l'image sont identifiés (par exemple l'écho double est différencié de l'écho simple).

Dans une quatrième étape 104, l'adéquation de l'hypothèse de bâtiment projetée dans l'espace image avec les caractéristiques radiométriques de l'image est évaluée, puis tant que le jeu local optimal de paramètres n'est pas trouvé, les paramètres sont modifiés et le modèle projeté selon la quatrième étape 103. Le procédé exécute donc une boucle itérative dans l'itération principale comprise entre la deuxième étape 102 et la cinquième étape 105.

Dans la mise en oeuvre décrite, deux critères d'évaluation de cette adéquation sont pris en compte. Le premier critère quantifie l'homogénéité radiométrique des différentes régions constitutives de l'hypothèse projetée dans l'espace image. Le second critère quantifie l'adéquation des contours de cette hypothèse projetée avec les contours présents dans l'image.

Un parcours exhaustif de l'ensemble des hypothèses possibles serait très coûteux en temps de calcul. Afin d'éviter un parcours trop coûteux de l'espace des modèles 3D, une heuristique a été mise en oeuvre pour obtenir des temps de calcul proches du temps réel opérateur. Cette heuristique vise à d'abord optimiser les critères fondés sur l'homogénéité des régions, puis à affiner la recherche avec les critères concernant les contours.

Notons $P_I(b)$ la signature du bâtiment en projetant le bâtiment b dans l'image I. La signature peut être décrite de façon équivalente par un ensemble de régions ou comme un ensemble de segments :

$$P_I(b) = \left\{ R_i, i = 1...N \right\} = \left\{ S_j, j = 1...M \right\}$$

Le premier critère, noté $C_{\text{région}}$, quantifie l'homogénéité spatiale des régions de la signature en calculant à partir du modèle de bruit caractéristique du capteur la log-vraisemblance généralisée des valeurs radiométriques des pixels de ces régions. La log-vraisemblance généralisée des valeurs radiométriques des pixels à l'intérieur d'une région $R_i$ peut s'écrire comme suit sous l'hypothèse d'indépendance statistique :

$$l_i = l(R_i | \vec{\Omega}_i) = \sum_{k \in R_i} \ln p(I(k | \vec{\Omega}_i))$$

où I(k) est la radiométrie du pixel k de l'image I et p représente la distribution statistique du bruit de l'image, loi entièrement décrite par le vecteur de paramètres $\vec{\Omega}_i$ dont l'estimation est effectuée par maximisation de la vraisemblance. Le critère d'homogénéité des régions $C_{région}$ est alors calculé comme la somme des log-vraisemblances généralisées de chacune des régions de la signature :

$$C_{région}(P_I(b)) = l_0 + \sum_{i=1}^{N} l_i$$

où $l_0$ représente la log-vraisemblance généralisée d'une région $R_0$ qui entoure le bâtiment. La région $R_0$ peut être définie comme la boîte englobante (pavé de l'image englobant) de l'ensemble des projections des bâtiments du domaine de définition considéré a priori. $R_0$ est fixée.

Le second critère, noté $C_{segment}$, considéré dans l'optimisation locale fondée sur l'approche segment qui consiste en le calcul du ratio $r(S_j)$ ou différence $d(S_j)$ (dépendant de la nature additive ou multiplicative du bruit des images) des valeurs médianes de la radiométrie à l'intérieur de voisinages situés de chaque côté des segments $S_j$ de la signature. Ce critère $C_{segment}$ est défini comme la conjonction des scores calculés pour chaque segment, par l'intermédiaire d'une moyenne géométrique comme suit :

$$C_{segment}(P_I(b)) = \sqrt[M]{\prod_{j=1}^{M} r(S_j)} \quad \text{dans le cas d'un bruit multiplicatif,}$$

$$C_{segment}(P_I(b)) = \sqrt[M]{\prod_{j=1}^{M} d(S_j)} \quad \text{dans le cas d'un bruit additif.}$$

Avantageusement, le procédé de modélisation selon l'invention adapte cette quatrième étape 104 en fonction du type d'image traitée afin que le procédé puisse fonctionner sur tous les types d'image. Aussi, dans l'exemple, le bruit additif gaussien est utilisé dans les images optiques et le modèle gamma est utilisé dans le cas du SAR.

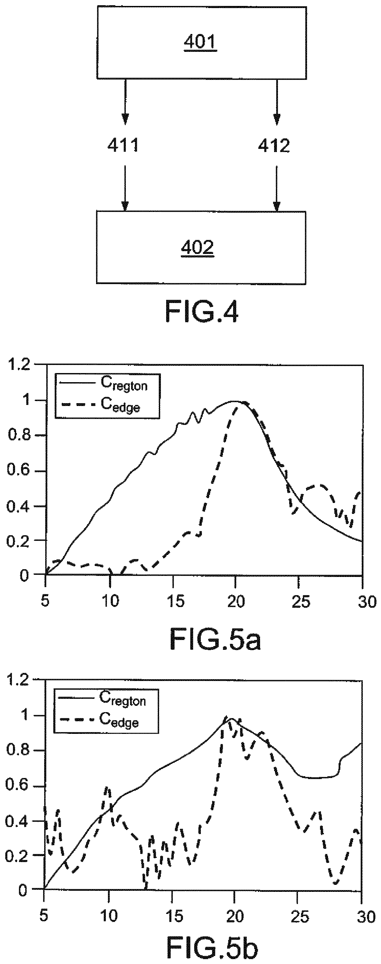

Une illustration des variations des critères $C_{région}$ et $C_{segment}$ est présentée en figure 5a (image optique) et 5b (image SAR), dans le cas d'un bâtiment donné, le seul paramètre hauteur du bâtiment étant variable et tous les autres paramètres étant fixés.

Le premier critère $C_{région}$ fondé sur l'homogénéité des régions est beaucoup plus lisse comme l'indiquent les variations présentées sur la figure ci-dessus (courbes en traits pleins), mais possède des bassins d'attraction plus larges que les bassins du deuxième critère $C_{segment}$ fondé sur les segments (courbes en pointillées).

Dans une cinquième étape 105, un test est exécuté pour déterminer si une autre hypothèse de bâtiment doit être testée, autrement dit, si un autre jeu de paramètres doit être appliqué au modèle de bâtiment, conformément à la deuxième étape 102. Dans l'exemple, si les critères d'adéquation utilisés lors de la quatrième étape 104 ont convergé vers des valeurs optimales, alors la sixième étape 106, décrite plus loin, est exécutée. Dans le cas contraire, un nouveau cycle comprenant la deuxième étape 102, troisième étape 103 et quatrième étape 104 est exécuté.

Dans une mise en oeuvre où toutes les hypothèses seraient testées de manière exhaustive, le résultat du test 105 serait positif tant que les N-uplets n'auraient pas encore été testés.

Dans une sixième étape 106, le procédé effectue une sélection de la ou des hypothèses de bâtiments considérées comme correctes. En d'autres termes, si certains modèles de bâtiments projetés étaient en adéquation avec l'image selon les critères évalués lors de la quatrième étape 104, alors ces modèles sont considérés comme modélisant des bâtiments réellement présents sur l'image.

Selon une mise en oeuvre du procédé selon l'invention, seule une occurrence du modèle paramétré de bâtiment est recherchée dans l'image. Dans ce cas, un seul bâtiment est extrait de l'image ; il s'agit du bâtiment correspondant à l'hypothèse dont l'adéquation avec la radiométrie de l'image est la meilleure.

Selon une autre mise en oeuvre du procédé selon l'invention, des seuils d'adéquation minimaux sont choisis pour chacun des critères d'adéquation et toutes les hypothèses correspondant à des maxima de ces critères qui dépassent les seuils sont considérées comme des bâtiments réels. Si aucun jeu de paramètres ne permet d'obtenir un niveau d'adéquation supérieur aux seuils, alors il est considéré que le bâtiment recherché n'est pas dans l'image.

Plusieurs bâtiments peuvent ainsi être trouvés dans l'image à partir d'un seul modèle paramétrique. Par exemple, s'il est choisi de rechercher une maison dont l'emprise au sol est rectangulaire et qui comprend un toit à deux pans et que l'image comprend un lotissement comportant plusieurs pavillons de dimensions et d'orientations différentes, mais comprenant tous une emprise rectangulaire et un toit à deux pans, alors le procédé selon l'invention modélisera chacun des pavillons du lotissement.

En résumé, le procédé de modélisation de la figure 1 exécute les étapes suivantes :

- choisir un modèle paramétrique 3D de bâtiment (première étape 101);

- tirer aléatoirement selon des lois uniformes les paramètres du modèle 3D (deuxième étape 102) ;
- projeter le bâtiment candidat dans l'image 111 à l'aide du modèle de prise de vue 112 pour former la signature du bâtiment (troisième étape 103)
- optimisation à partir du critère région à partir de ces paramètres initiaux (tirés au hasard à partir d'une loi uniforme), puis
- optimisation à partir du critère fondé sur les segments à partir de la première optimisation (quatrième étape 104, cinquième étape 105 et deuxième étape 102) ;
- tant, par exemple, qu'un nombre prédéterminé de jeux de paramètres n'a pas encore été tiré, revenir à la deuxième étape 102 de tirage aléatoire pour initialiser un nouveau jeu de paramètres ;
- déterminer les paramètres conduisant à la meilleure adéquation (sixième étape 106).

Ce procédé de génération-optimisation peut être itéré selon, par exemple, un procédé de type Monte Carlo. Les tirages aléatoires sont répétés afin de rendre plus robustes les optimisations mais un nombre relativement faible de tirages s'avère suffisant. L'algorithme d'optimisation utilisé peut être une classique descente de gradient avec recherche linéaire, où le vecteur gradient est calculé par simples différences finies.

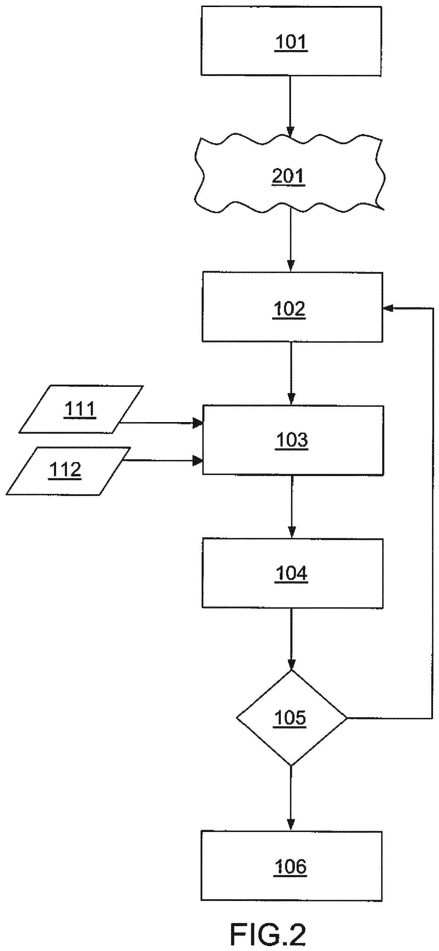

La figure 2 illustre les étapes d'une deuxième mise en oeuvre du procédé de modélisation selon l'invention, dans laquelle un utilisateur intervient pour restreindre la combinatoire impliquée par le procédé. En effet, l'espace des hypothèses peut être important puisqu'il s'étend sur le produit cartésien de tous les domaines de définitions associés à chacun des paramètres du modèle. Le fait de restreindre le domaine de définition d'un ou de plusieurs paramètres, voire de fixer la valeur de ces paramètres permet d'accélérer l'exécution du procédé. Par exemple, au lieu de prendre en compte l'hypothèse selon laquelle la hauteur des bâtiments peut être comprise entre 3 et 40m, l'hypothèse plus restrictive selon laquelle la hauteur des bâtiments est comprise entre 3m et 10m sera considérée.

Le procédé peut être exécuté sur une machine de calcul tel qu'un ordinateur pourvu d'un écran sur lequel l'utilisateur peut visualiser l'image. Ainsi, cet utilisateur peut, en quelques opérations élémentaires, limiter l'espace de recherche en tenant compte de sa connaissance de l'image. Par exemple, il peut exclure les zones géographiques dans lesquelles il n'y a pas de bâtiments en détourant sur l'écran les zones pertinentes via des moyens de saisi tel qu'une souris.

Cette étape 201 de restriction des domaines de définition des paramètres peut être exécutée entre la première étape 101 et la deuxième étape 102 décrite en figure 1.

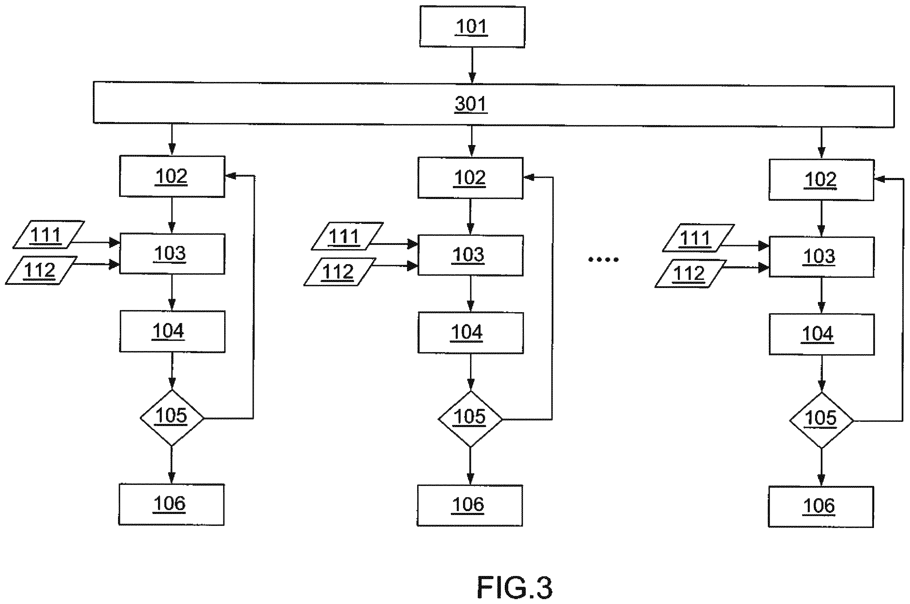

La figure 3 illustre les étapes d'une troisième mise en oeuvre du procédé de modélisation selon l'invention. Selon cette mise en oeuvre, plusieurs domaines de définitions distincts 301 sont établis pour un sous-ensemble de paramètres du modèle paramétrique choisi lors de la première étape 101, puis les deuxième, troisième, quatrième, cinquième et sixième étapes 102, 103, 104, 105, 106 sont exécutées successivement pour chacun de ces domaines de définitions distincts. Par exemple, si deux bâtiments sont recherchés dans une image, le premier bâtiment étant situé dans une première zone de l'image, et le deuxième bâtiment étant situé dans une deuxième zone de l'image, deux domaines de définitions distincts sont créés, chacun de ces domaines de définition couvrant des latitudes et longitudes adaptées aux zones de recherche. Les domaines de définitions peuvent être créés manuellement, conformément à la description de la figure 2.

La figure 4 illustre les étapes d'un procédé de détection de changements selon l'invention. Ce procédé peut être utilisé pour comparer deux images d'une même zone géographique prises à des instants différents, par exemple deux images d'une même zone urbaine prises à un an d'intervalle. Il permet notamment de détecter les bâtiments qui ont été détruits, construits ou modifiés. Dans l'exemple décrit en regard de la figure 4, deux images sont comparées.

Dans un premier temps 401, un procédé de modélisation est exécuté indépendamment sur chacune des deux images. Le procédé de modélisation est, par exemple, le procédé tel que décrit plus haut en regard des figures 1 à 3. A l'issue de cette étape, deux modèles 3D 411, 412 sont produits, un modèle correspondant à chaque image.

Dans un deuxième temps 402, les deux modèles 3D 411, 412 sont comparés. Pour cela, une distance mathématique peut être créée pour mesurer les différences entre deux objets présents dans chacun des modèles. Avantageusement, un seuil est également choisi afin de distinguer les différences qui correspondent à de réelles modifications sur le terrain et celles qui ne sont dues qu'aux imprécisions dans la modélisation des objets. Ce seuil pourra en outre être ajusté en fonction des métadonnées associées aux images fournies en entrée. Par exemple, si les deux images sont prises avec des points de vue très différents, le seuil peut être relevé pour éviter de détecter de fausses différences.

Selon une autre mise en oeuvre du procédé de détection de changements, le procédé est d'abord exécuté sur une image, puis les modèles de bâtiment extrait de cette image sont projetés dans la seconde image. L'adéquation entre ces projections et les caractéristiques radiométriques de la seconde image est ensuite testée.

Un avantage du procédé de détection de changements selon l'invention est qu'il permet de comparer deux images de types différents (exemple : une image panchromatique avec une image multispectrale), contrairement aux méthodes classiques basées sur des comparaisons radiométriques entre deux images optiques, par exemple.

Par ailleurs, le procédé de modélisation selon l'invention peut être avantageusement exploité pour produire des points homologues.

On sait que des images d'une même zone de la surface terrestre peuvent être issues de sources multiples et ne pas être associées à un modèle de prise de vue très précis. Un recalage de ces images entre-elles est alors souhaité afin d'affiner le géoréférencement des images, autrement dit pour améliorer la fonction de correspondance entre les points du terrain (référencés par des coordonnées géographiques), et les points de l'image (référencés par des coordonnées image, ou pixels). Les méthodes de mise en correspondance d'images entre elles nécessitent la détermination d'un grand nombre de points homologues dans les images. Les points homologues sont des points présents sur chacune des images qui représentent le même point du terrain imagé. Etant donné que les images sont généralement prises avec des capteurs différents et/ou avec des points de vue différents, alors les points homologues n'ont pas les mêmes coordonnées sur les images. Par souci de simplification, le terme de « recalage » sera utilisé par la suite pour désigner les méthodes permettant d'extraire des points homologues d'un groupe d'images aériennes ou spatiales représentant une même zone de la surface terrestre.

Le recalage peut être réalisé manuellement, automatiquement ou selon une combinaison d'actions manuelles et de procédés automatisés. Lorsque le recalage est manuel, des moyens d'affichage, par exemple un écran, sont utilisés pour permettre à un opérateur de saisir directement les points homologues sur chacune des images à l'aide d'une souris ou de moyens similaires. Cette saisie s'avère fastidieuse et coûteuse, l'opérateur devant choisir un point d'intérêt dans une image, puis successivement saisir précisément ce point d'intérêt dans chacune des autres images. De plus, certains types d'images comme les images de type SAR (acronyme anglo-saxon pour « Synthetic Aperture Radar » ou radar à synthèse d'ouverture) sont très difficiles à interpréter pour un opérateur humain, ce qui complique la saisie des points homologues, nécessite des opérateurs formés spécifiquement à ce type d'image, et augmente en conséquence les coûts de recalage.

Certaines techniques automatiques ont été proposées pour accélérer l'extraction. Classiquement, une méthode par corrélation est employée, dans laquelle des points dits points d'intérêt, souvent des extrema de radiométrie comme les points de Harris ou les primitives SIFT (« Scale-Invariant Feature Transform ») sont extraits. Celle méthode ne fonctionne pas lorsque les images à recaler sont de natures différentes, par exemple dans le cas d'une image optique avec une image SAR. On peut notamment citer la méthode décrite dans le brevet américain publié le 14 juin 2011 sous le numéro US 7,961,982, laquelle méthode extrait des points d'intérêt dans chacune des images pour générer une fonction de transformation d'une image à l'autre. Toutefois, les méthodes automatiques connues ne fonctionnent correctement qu'avec des images optiques, et ne permettent donc pas, en règle générale, d'effectuer un recalage à partir d'images de type SAR. De plus, pour que les résultats soient satisfaisants, il faut que les points de vue soient proches, en particulier dans les zones urbaines, où une petite différence de point de vue peut conduire à des occultations importantes et de fausses corrélations.

Certaines techniques automatiques sont basées sur l'extraction préalable de segments, en particulier pour le traitement des images SAR. Des segments extraits des différentes images sont appariés et des points homologues sont recherchés dans ces segments. Cependant, cette technique est sujette à de nombreuses erreurs, notamment à cause des imperfections dans les détections de contours et dans la difficulté à trouver un point particulier dans un segment donné. Elles nécessitent un paramétrage complexe impliquant de nombreux seuils à fixer préalablement à l'exécution de l'algorithme. En outre, un jeu de paramètres aboutissant à des résultats satisfaisants pour une image donnée peut s'avérer totalement inadapté à d'autres images ; ce problème est encore accru pour les images de type SAR.

Le procédé d'extraction de points homologues selon l'invention permet de recaler des images entre-elles, ces images pouvant être issus de capteurs de prise de vue de types différents, avoir été prises à des dates différentes et depuis des points de vues différents.

Le procédé est exécuté sur un ensemble de N images $I_1,...,I_N$ associées à leurs modèles de géoréférencement $f_1,...,f_N$, les images pouvant être de natures hétérogènes (images optiques, SAR, multispectrales ou hyperspectrales, par exemple), N étant supérieur ou égal à deux. Chaque image est issue d'un capteur embarqué sur un aéronef ou un satellite. Le modèle de prise de vue de l'image géoréférencée peut être représenté par une fonction paramétrée, notée $f_{\theta_1,...,\theta_n}(X,Y,Z)$, faisant correspondre une coordonnée 3D de l'espace terrain avec une coordonnée 2D sur l'image:

$$f_{(\theta,...,\theta_n)}(X_{terrain}, Y_{terrain}, Z_{terrain}) = (colonne_{image}, ligne_{image})$$

où les paramètres $\theta_1, ..., \theta_n$ dépendent des caractéristiques physiques du capteur. Ces modèles sont imparfaits, voire parfois indisponibles et donc remplacés par des modèles génériques. Aussi, les modèles correspondant à chaque image ne sont généralement pas cohérents.

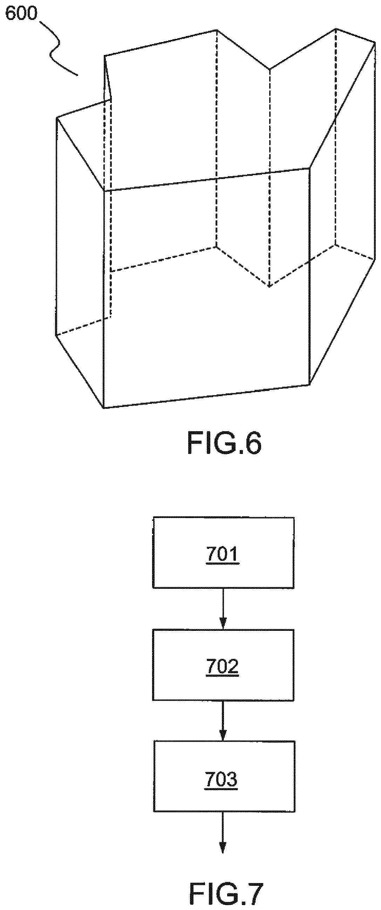

Le procédé selon l'invention permet d'établir une pluralité de N-uplets de points en coordonnées images dans les images 1 à N, chacun de ces N-uplets rassemblant les vues d'un même point du terrain représenté dans chacune des N images. Pour la création de ces N-uplets, le procédé utilise la présence de bâtiments (ou plus généralement d'objets fixe de grande taille) dans les images. Dans l'exemple, on suppose que ces bâtiments peuvent être modélisés par des modèles 3D extrudés, c'est-à-dire des cylindres droits à base polygonale, définis par un polygone horizontal pouvant représenter le toit et une hauteur, comme représenté en figure 6. Les exemples présentés par la suite utilisent des modèles de bâtiments pour le recalage, les bâtiments présentant notamment l'avantage d'être fixes et de grandes tailles, mais le procédé selon l'invention peut utiliser la modélisation de tout objet réel dont les dimensions sont suffisamment importantes pour apparaître sur l'image.

Comme illustré en figure 7, Le procédé de mise en correspondance selon l'invention comprend trois phases principales 701, 702, 703. La première phase 701 est une phase d'extraction monoscopique des bâtiments dans chacune des images à recaler. En d'autres termes, des bâtiments sont modélisés en trois dimensions dans chacune des images indépendamment des autres images. Cette modélisation peut être effectuée manuellement, ou faire l'objet d'une automatisation partielle ou totale. Dans l'exemple, un procédé semi-automatique décrit ci-après est employé. Les K bâtiments à extraire sont notés $B^k$, $k \in [1,K]$, les K x N modèles de ces bâtiments à créer pour l'ensemble des N images étant notés $b_i^k$, $k \in [1,K]$, $i \in [1,N]$.

Dans un premier temps, un opérateur humain choisit un bâtiment dont il a détecté la présence dans chacune des N images. Dans chaque image, il désigne à l'aide d'un pointeur - par exemple avec une souris d'ordinateur - la région qui semble contenir la signature du bâtiment, c'est-à-dire sa représentation dans l'image.

Dans un deuxième temps, dans chacune des régions pointées, un modèle 3D du bâtiment est reconstitué, soit de façon entièrement manuelle - par exemple par saisie complète du bâtiment par l'opérateur -, soit de manière semi-automatique, soit à l'aide d'un procédé de reconstitution automatique de modèle 3D de bâtiment à partir d'une seule image, c'est-à-dire une modélisation monoscopique. Les N images permettent de construire N modèles 3D différents $b_i^k$ du même bâtiment $B^k$ (car les modèles de prise de vue de ces images ne sont pas nécessairement cohérents).

Selon une mise en oeuvre du procédé selon l'invention, en particulier lorsque l'extraction est entièrement automatique, la première étape de choix du bâtiment à modéliser par un opérateur n'est pas exécutée au cours de la première phase. Avantageusement, lorsque l'extraction monoscopique est entièrement automatique, celle-ci peut être effectuée de la manière suivante, pour chaque image indépendamment :

- choisir un modèle paramétrique de la surface externe du bâtiment à extraire;
- pour plusieurs jeux de paramètres dudit modèle :

  ◦ projeter le modèle paramétré dans l'image en appliquant le modèle physique de prise de vue disponible;
  ◦ évaluer l'adéquation entre le modèle projeté et les caractéristiques radiométriques de l'image ;

- déterminer les paramètres du modèle pour lesquels l'adéquation est la meilleure.

Ainsi, pour chaque image, K jeux de paramètres définissant K modèles de bâtiments sont créés et à l'issue de cette première phase 701, $N \times K$ modèles 3D de bâtiments $b_i^k$, $k \in [1,K]$, $i \in [1,N]$ sont créés.

La deuxième phase 702 permet de sélectionner les instances de bâtiments modélisés à prendre en compte dans la troisième phase 703 décrite plus loin. En effet, certains modèles de bâtiments sont trop distants d'une image à l'autre pour pouvoir être pris en compte par le procédé de manière fiable. Pour chaque bâtiment $B^k$, $k \in [1,K]$ du terrain, la deuxième phase 702 permet donc de vérifier que les différentes instances 3D $b_i^k$ sont suffisamment semblables. Lorsque les différents modèles créés d'un même bâtiment sont considérés comme trop éloignés lors de cette deuxième phase 702, alors le bâtiment n'est pas utilisé dans la troisième phase 703 du procédé selon l'invention. Cette deuxième phase 702 un rôle de filtrage, qui est utile en particulier lorsque les points de vue à l'origine des différentes images sont très différents.

Dans l'exemple, les modèles de bâtiment sont contraints à des cylindres droits à base polygonale. Le modèle peut donc être défini par un polygone représentant le toit et se situant dans un plan horizontal (donc à altitude constante) et une valeur de hauteur du bâtiment. D'autres modèles plus complexes pourraient être employés.

Soit $B^k$ un bâtiment et soient i et j les indices de deux images à partir desquelles sont construits respectivement les deux modèles 3D $b_i^k$ et $b_j^k$ de ce bâtiment. Chacun de ces modèles est défini, dans l'exemple, par un polygone et une hauteur.

Un premier critère de similarité des hauteurs est utilisé de manière facultative. Le critère de similarité des hauteurs $s_h$ est la différence relative entre les deux hauteurs $h_i^k$ et $h_j^k$ des modèles de bâtiments $b_i^k$ et $b_j^k$ comparés issus des deux images i et j :

$$s_h(k,i,j) = \frac{\left|h_i^k - h_j^k\right|}{\max(h_i^k, h_j^k)}$$

Si le critère de similarité $s_h(k,i,j)$ du bâtiment $B^k$ extrait d'images i et j est supérieur à un seuil donné, le bâtiment $B^k$ est rejeté. Ce bâtiment ne peut pas être considéré comme un bâtiment de liaison entre les différentes images, c'est-à-dire un bâtiment pris en compte dans la troisième phase 703.

Dans l'exemple, un deuxième critère de similarité des polygones est utilisé au cours de cette deuxième phase 702. Ce critère est fondé sur le fait que les polygones correspondant au même bâtiment dans les différentes images doivent avoir le même nombre de sommets pour être comparés. Si ce n'est pas le cas, le bâtiment $B^k$ et donc tous ses modèles $b_i^k$ pour tout indice i sont rejetés par la deuxième phase 702 du procédé. Il est considéré que deux modèles $b_i^k$ et $b_j^k$, extraits sur deux images i et j, d'un même bâtiment $B^k$ possèdent un toit représenté par des polygones, respectivement $p_i^k$ et $p_j^k$, qui possèdent le même nombre de sommets, noté n. Les coordonnées des sommets des polygones sont par exemple exprimées dans un repère cartésien 2D. L'hypothèse est posée que les différences de géoréférencement à corriger des images i et j impliquent que les polygones $p_i^k$ et $p_j^k$ diffèrent d'une transformation proche d'une similitude.

Soit le polygone $p_i^k$ et ses sommets $M_i^k(1),...M_i^k(n)$ considérés dans le sens direct du plan et le polygone $p_j^k$ avec ses sommets $M_j^k(1),...M_j^k(n)$. Soit $\alpha^2$ le rapport des aires des deux polygones $p_i^k$ et $p_j^k$. On définit les n similitudes 2D, notées $sim_{i,j}^k(l)$ pour $l = 1,...n$ de rapport $\alpha$ qui transforment l'isobarycentre de $p_i^k$ en celui de $p_j^k$ et les sommets $M_i^k(l)$ en $M_j^k(l)$ pour $l = 1...n$. Le critère de similarité entre les deux polygones $p_i^k$ et $p_j^k$ est alors défini par la distance minimale entre $p_i^k$ et ses images par les n similitudes. Plus précisément :

$$s_p'(k,i,j) = \min_{l \in \langle 1,n \rangle} \sum_{m=1}^{n} \left\| M_j^k(m) - sim_{i,j}^k(l)(M_i^k(m)) \right\|^2$$

Si le critère de similarité $s_p'(k,i,j)$ du bâtiment $B^k$ extrait des images i et j est supérieur à un seuil donné pour un couple donné d'images (i, j), le bâtiment $B^k$ peut être rejeté, et ainsi ne pas être considéré comme bâtiment de liaison entre les différentes images.

Les critères précités sont cités à titre d'exemple et pourraient être remplacés ou complétés par la prise en compte d'autres critères. A l'issue de la deuxième phase 702, un ensemble de NxQ modèles de bâtiments parmi les NxK est conservé pour être pris en compte dans la troisième phase 703 du procédé selon l'invention.

La troisième phase 703 vise en particulier à extraire des points homologues à partir des Q bâtiments issus du filtrage opéré lors de la deuxième phase 702. Dans l'exemple, les points des toits des modèles 3D $b_i^k$ de bâtiments sont mis en correspondance, les toits étant modélisés sous la forme de polygones 2D. Cet exemple est non limitatif, et d'autres méthodes pourraient être employées pour choisir les points homologues. Par souci de clarté, comme l'on considère un bâtiment fixé d'indice k dans la suite de la description de la troisième phase 703, les notations sont allégées par suppression des indices k.

On considère un bâtiment et N images de ce bâtiment qui ont permis de reconstruire N modèles 3D $b_i$ du bâtiment, un pour chaque image indicée par i, les modèles étant définis dans l'exemple par une hauteur $h_i$ et un polygone $p_i$ du plan représentant son toit. Il est supposé que tous les polygones $p_i$ possèdent le même nombre de sommets fixé à n, n étant supérieur ou égal à 3. Chaque polygone peut être noté comme une suite ordonnée de n points du plan :

$$p_i = \left\langle M_i^1,...,M_i^l,...,M_i^n \right\rangle, l \in \left\langle 1...n \right\rangle$$

La troisième phase 703 vise à mettre en correspondance les n sommets de chaque polygone 2D afin de former, pour le bâtiment considéré, n N-uplets de points, ces N-uplets étant exploités par la suite pour obtenir les ensembles de points homologues recherchés. La difficulté de cette mise en correspondance est due en particulier au fait que les N images ne possèdent pas de géoréférencement cohérent. En effet, si leur géoréférencement était cohérent, les N modèles 3D seraient identiques et le recalage de ces images s'avérerait inutile. Le recalage n'étant pas parfait, les N polygones du plan ne sont pas identiques, même si à l'issue de la deuxième phase 702, ils peuvent être assez semblables selon les critères de similarité de cette deuxième phase 702.

Dans l'exemple, le critère de similarité de polygones utilisé dans la deuxième phase 702 est réutilisé dans cette troisième phase 703. Si une seule similitude parmi les n possibles atteint le minimum du critère $s'_p$, cette similitude définit une unique permutation circulaire des indices des sommets du polygone.

Si cette similitude n'est pas unique, autrement dit, si plusieurs similitudes parmi les n possibles atteignent le minimum du critère $s'_p$, ce qui est rare, il faut choisir « la meilleure » dans un sens défini ci-après. Une similitude affine est la composée d'une homothétie, d'une translation et d'une rotation. Deux polygones différents $p_i$ et $p_j$ issus des images i et j sont considérés, tous les deux possédant n sommets. En s'affranchissant des facteurs d'homothétie et de la translation entre les deux polygones (c'est-à-dire entre leur centre de gravité), la similitude cherchée se réduit à une rotation vectorielle. Si cette rotation vectorielle minimisant le critère parmi les n candidates n'est pas unique, cela signifie que le groupe des rotations laissant invariant le polygone n'est pas réduit à l'identité. Parmi les p≤n rotations candidates, on choisit celle dont l'angle de rotation est le plus faible modulo 2*pi en valeur absolue parmi les p angles. Ceci permet de définir la rotation, donc la similitude de façon unique.

Ainsi, pour deux images données d'indices i et j, la troisième phase 703 permet d'associer une permutation circulaire unique faisant correspondre à chaque sommet d'un premier polygone modélisant le toit du bâtiment extrait de la première image i, un sommet d'un deuxième polygone modélisant le toit du même bâtiment extrait de la deuxième image j. Cette méthode comporte notamment les deux avantages suivants. D'une part elle permet de reconnaître les « bons » sommets même si les toits cherchés ont un groupe de symétrie non nul (comme les polygones réguliers). D'autre part, elle permet de définir une correspondance unique ne dépendant pas du chemin parcouru dans l'ensemble des images. Autrement dit, si on note $s_{i,j}$ la permutation circulaire définie au sens ci-dessus, on a la relation suivante du type «relation de Chasles » : $s_{i,j} \circ s_{j,k} = s_{i,k}$, qui garantit le caractère intrinsèque des correspondances.

A partir des points homologues extraits, un recalage des images entre-elles peut ainsi être effectué par des méthodes connues de l'homme de l'art. Par exemple, les modèles de prise de vue peuvent être ajustés en fonction de ces points homologues.

Le procédé selon l'invention permet de générer un nombre important de N-uplets de points homologues si le bâtiment possède un toit polygonal, même si ce polygone est régulier et possède donc un groupe de rotations qui le rendent invariant non réduit à l'identité. Ainsi, avec cette méthode, il est possible de fabriquer des points homologues en grand nombre, même s'ils ne sont pas vus nécessairement dans certaines images.

Un avantage du procédé d'extraction de points homologues selon l'invention est qu'il ne nécessite pas de réglage complexe de seuils, lesquels sont généralement sources de manque de robustesse. Contrairement aux procédés habituellement utilisés dans l'art antérieur, le procédé selon l'invention n'est donc pas dépendant des images traitées.

Un avantage d'apparier des bâtiments homologues est qu'il est possible de créer des points homologues, sans que ceux-ci soient vus dans toutes les images à mettre en correspondance. Il s'agit plus particulièrement d'un avantage pour le traitement des zones imagées en environnement urbain dense, où le moindre changement de point de vue produit des occultations importantes.

Un avantage du procédé de modélisation selon l'invention est qu'il prend des hypothèses minimales sur la nature radiométrique et géométrique des images, ce qui permet d'obtenir des résultats satisfaisants sur des types d'image très divers.

Le procédé de modélisation selon l'invention peut également être mis en oeuvre indépendamment sur plusieurs images représentant la même zone géographique, puis les résultats de modélisation obtenus pour chacune des images peuvent être combinés pour améliorer la fiabilité ou la précision de la modélisation.

## Revendications

**1.** Procédé d'extraction monoscopique d'un objet réel représenté dans une image de la surface terrestre, le procédé étant mis en oeuvre par un logiciel exécuté sur un système de calcul, l'image étant référencée géographiquement et produite par un capteur aérien ou spatial associé à un modèle physique de prise de vue, le procédé étant **caractérisé en ce qu'**il comprend au moins les étapes suivantes :

- choisir un modèle paramétrique de la surface externe dudit objet réel (101);
- choisir (102) plusieurs jeux initiaux de paramètres dudit modèle paramétrique et pour chacun desdits jeux initiaux de paramètres :

∘ projeter (103) le modèle paramétré dans l'image en appliquant le modèle physique de prise de vue;
∘ évaluer, selon des critères radiométriques prédéfinis, l'adéquation (104) entre le modèle projeté et l'image ;
∘ modifier les paramètres par une méthode d'optimisation exploitant lesdits critères radiométriques, et réitérer, avec lesdits paramètres modifiés par optimisation, le procédé à partir de l'étape de projection (103) du modèle, jusqu'à trouver le jeu de paramètres optimal issu dudit jeu initial de paramètres, en utilisant :

- dans un premier temps, un critère d'adéquation optimale entre l'homogénéité radiométrique des zones correspondant aux faces du modèle projeté dans l'image, et
- dans un deuxième temps, un critère d'adéquation radiométrique des contours du modèle projeté dans l'image avec des contours présents dans l'image ;

- déterminer, parmi lesdits jeux de paramètres optimaux déterminés, les paramètres du modèle pour lesquels l'adéquation est la meilleure (106), pour modéliser ledit objet avec ces paramètres.

2. Procédé d'extraction monoscopique selon la revendication 1, dans lequel les jeux initiaux de paramètres sont tirés aléatoirement.

3. Procédé d'extraction monoscopique selon la revendication 2, dans lequel chacun des paramètres est tiré aléatoirement selon une loi uniforme dans son domaine de définition.

4. Procédé d'extraction monoscopique de plusieurs objets réels représentés dans une image référencée géographiquement de la surface terrestre, l'image étant produite par un capteur aérien ou spatial, dans lequel on exécute l'étape de choix du modèle paramétrique (101) selon la revendication 1, puis dans lequel on définit, pour un sous-ensemble de paramètres, plusieurs domaines de définition (301), avant d'exécuter les étapes selon la revendication 1 de projection (103), d'évaluation de l'adéquation (104) entre le modèle projeté et l'image, et de détermination des paramètres optimaux (106) sur chacun des domaines de définition définis précédemment.

5. Procédé d'extraction monoscopique selon l'une quelconque des revendications précédentes, le procédé étant mis en oeuvre par un logiciel exécuté sur un système de calcul pourvu de moyens d'affichage et d'interaction avec un utilisateur, dans lequel, après l'étape de choix du modèle paramétrique (101) selon la revendication 1, un utilisateur définit en utilisant les moyens d'interaction, un domaine de définition (201) pour un sous-ensemble de paramètres, avant d'exécuter les étapes de projection (103), d'évaluation de l'adéquation (104) entre le modèle projeté et l'image, et de détermination des paramètres optimaux (106) sur le domaine de définition défini précédemment par l'utilisateur.

6. Procédé de détection de changements entre deux images d'une même zone géographique prise à deux instants différents, le procédé comprenant une première étape (401) d'exécution du procédé d'extraction monoscopique selon l'une quelconque des revendications précédentes sur chacune des deux images, et une deuxième étape de comparaison (402) des modèles (411, 412) obtenus à l'issue de la première étape.

7. Système d'extraction monoscopique d'un objet réel représenté dans une image de la surface terrestre, l'image étant référencée géographiquement et produite par un capteur aérien ou spatial, **caractérisé en ce que** le système comprend au moins une machine de calcul configurée pour exécuter le procédé selon l'une quelconque des revendications 1 à 5.

8. Procédé d'extraction d'au moins un groupe de N points homologues à partir de N images aériennes ou spatiales référencées géographiquement, N≥2, les images représentant une même zone de la surface terrestre, les points homologues d'un même groupe correspondant à un même point géographique dans ladite zone, chacun des points homologues dudit groupe étant défini par des coordonnées dans une image différente de celle des autres points homologues du même groupe, le procédé comprenant les étapes suivantes :

- pour chacune des N images, modéliser (701) avec le procédé d'extraction monoscopique selon l'une des revendications 1 à 5, la surface externe de K objets réels représentés dans l'image, K≥1 ;
- sélectionner parmi lesdits K objets réels, les Q objets (702), Q≤K, lesdits Q objets étant les objets pour lesquels les N modèles créés lors de l'étape d'extraction monoscopique sont éloignés d'une distance inférieure à un niveau prédéterminé (702), la distance étant l'expression de la mesure d'un critère de similarité entre les N modèles,
- pour chacun desdits Q objets, choisir au moins un point dans chacun des N modèles de cet objet (703), et déterminer dans chacune des N images les coordonnées correspondant aux points choisis, l'ensemble desdites coordonnées formant l'un desdits groupes de N points homologues.

9.  Procédé d'extraction de points homologues selon la revendication 8, la surface externe des objets étant modélisée (701) en trois dimensions au moyen d'arrêtés et de sommets, dans lequel pour chacun desdits Q objets issus de l'étape de sélection (702) des objets, on choisit (703) les points homologues parmi lesdits sommets.

10. Procédé d'extraction de points homologues selon la revendication 8 ou 9, un premier modèle de l'un des objets réels modélisés étant généré à partir d'une première image, un deuxième modèle de ce même objet étant généré à partir d'une deuxième image, dans lequel une étape de mise en correspondance des sommets de chacun des deux modèles est exécutée préalablement à l'étape de choix (703) des points homologues.

11. Procédé de correction de modèles de prise de vue associés à des images, dans lequel chaque image est produite par un capteur aérien ou spatial associé à un modèle physique de prise de vue, le procédé comprenant l'exécution du procédé d'extraction de points homologues selon l'une quelconque des revendications 8 à 10, puis une étape de correction desdits modèles de prise de vue en fonction des groupes de points homologues extraits.

12. Système de recalage d'images, **caractérisé en ce qu'**il comprend une machine de calcul configurée pour exécuter le procédé selon l'une quelconque des revendications 8 à 10.

**Patentansprüche**

1.  Monoskopisches Extraktionsverfahren eines realen Objekts, welches in einem Bild der Erdoberfläche dargestellt wird, wobei das Verfahren durch eine Software umgesetzt wird, welche auf einem Rechensystem ausgeführt wird, wobei das Bild geografisch referenziert und durch einen Sensor in der Luft oder im Raum in Verbund mit einem physischen Aufnahmemodell erzeugt wird, wobei das Verfahren **dadurch gekennzeichnet ist, dass** es mindestens folgende Schritte beinhaltet:

    ■ Auswählen eines parametrischen Modells der äußeren Fläche des realen Objekts (101);
    ■ Auswählen (102) mehrerer anfänglicher Parametersätze des parametrischen Modells, und für jeden der anfänglichen Parametersätze:

    ☐ Projizieren (103) des parametrierten Modells in das Bild unter Anwendung des physischen Aufnahmemodells;
    ☐ Bewerten, nach zuvor definierten radiometrischen Kriterien, der Adäquation (104) zwischen dem projizierten Modell und dem Bild;
    ☐ Ändern der Parameter anhand eines Optimierungsverfahrens, welches die radiometrischen Kriterien auswertet, und Wiederholen, anhand der durch Optimierung veränderten Parameter, des Verfahrens ab dem Schritt des Projizierens (103) des Modells, bis der optimale Parametersatz anhand des anfänglichen Parametersatzes gefunden wird, durch Verwendung von:

    • in einem ersten Schritt, eines Kriteriums der optimalen Adäquation zwischen radiometrischer Homogenität der Zonen, welche den Seiten des in das Bild projizierten Modells entsprechen, und
    • in einem zweiten Schritt, eines Kriteriums der radiometrischen Adäquation der Konturen des in das Bild projizierten Modells mit den im Bild vorhandenen Konturen;

    ■ Bestimmen, unter den bestimmten optimalen Parametersätzen, der Parameter des Modells, für welche die Adäquation am besten ist (106), zur Modellkonstruktion des Objekts anhand dieser Parameter.

2.  Monoskopisches Extraktionsverfahren nach Anspruch 1, bei welchem die anfänglichen Parametersätze nach dem Zufallsprinzip gezogen werden.

3.  Monoskopisches Extraktionsverfahren nach Anspruch 2, bei welchem jeder der Parameter nach dem Zufallsprinzip gemäß einem einheitlichen Gesetz in dessen Definitionsbereich gezogen wird.

4.  Monoskopisches Extraktionsverfahren mehrerer realer Objekte, welche in einem geografisch referenzierten Bild der Erdoberfläche dargestellt sind, wobei das Bild durch einen Sensor in der Luft oder im Raum erzeugt wird, bei welchem man den Schritt des Auswählens des parametrischen Modells (101) nach Anspruch 1 ausführt, und bei welchem man anschließend für eine Untergruppe von Parametern mehrere Definitionsbereiche (301) definiert, bevor man die Schritte nach Anspruch 1 des Projizierens (103), des Bewertens der Adäquation (104) zwischen dem projizierten Modell und dem Bild, und des Bestimmens der optimalen Parameter (106) in jedem der zuvor definierten Definitionsbereiche ausführt.

5. Monoskopisches Extraktionsverfahren nach einem der vorhergehenden Ansprüche, wobei das Verfahren durch eine Software umgesetzt wird, welche auf einem mit Anzeigemitteln und mit Interaktionsmitteln mit einem Benutzer versehenen Rechensystem ausgeführt wird, bei welchem, nach dem Schritt des Auswählens des parametrischen Modells (101) nach Anspruch 1 ein Benutzer unter Verwendung der Interaktionsmittel einen Definitionsbereich (201) für eine Untergruppe von Parametern definiert, bevor er die Schritte des Projizierens (103), des Bewertens der Adäquation (104) zwischen dem projizierten Modell und dem Bild und des Bestimmens der optimalen Parameter (106) in dem zuvor durch den Benutzer definierten Definitionsbereich ausführt.

6. Verfahren zur Erkennung von Änderungen zwischen zwei Bildern einer gleichen geografischen Zone, welche zu zwei unterschiedlichen Zeitpunkten aufgenommen wurde, wobei das Verfahren einen ersten Schritt (401) des Ausführens des monoskopischen Extraktionsverfahrens nach einem der vorhergehenden Ansprüche an jedem der beiden Bilder und einen zweiten Schritt des Vergleichens (402) der nach Abschluss des ersten Schrittes erzielten Modelle (411, 412) beinhaltet.

7. Monoskopisches Extraktionssystem eines realen Objekts, welches in einem Bild der Erdoberfläche dargestellt ist, wobei das Bild durch einen Sensor in der Luft oder im Raum geografisch referenziert und erzeugt wird, **dadurch gekennzeichnet, dass** das System mindestens eine Rechenmaschine beinhaltet, welche konfiguriert ist, um das Verfahren nach einem der Ansprüche 1 bis 5 auszuführen.

8. Monoskopisches Extraktionsverfahren mindestens einer Gruppe von N homologen Punkten anhand von N geografisch referenzierten Luft- oder Raumbildern, wobei N≥2 beträgt, wobei die Bilder eine gleiche geografische Zone der Erdoberfläche darstellen, wobei die homologen Punkte einer gleichen Gruppe einem gleichen geografischen Punkt in der Zone entsprechen, wobei jeder der homologen Punkte der Gruppe durch Koordinaten in einem anderen Bild als demjenigen der anderen homologen Punkte der gleichen Gruppe definiert sind, wobei das Verfahren folgende Schritte beinhaltet:

- für jedes der N Bilder, Konstruieren eines Modells (701) anhand des monoskopischen Extraktionsverfahrens nach einem der Ansprüche 1 bis 5, der äußeren Fläche von K realen Objekten, welche im Bild dargestellt sind, wobei K≥1;
- Auswählen unter den K realen Objekten, der Q Objekte (702), wobei Q≤K beträgt, wobei die Q Objekte diejenigen Objekte sind, für welche die N beim Schritt der monoskopischen Extraktion geschaffenen Modelle um einen Abstand entfernt sind, welcher ein vorbestimmtes Niveau (702) unterschreitet, wobei der Abstand der Ausdruck des Grades eines Ähnlichkeitskriteriums zwischen den N Modellen ist,
- für jedes der Q Objekte, Auswählen von mindestens einem Punkt in jedem der N Modelle dieses Objekts (703), und Bestimmen, in jedem der N Bilder, der Koordinaten, welche den gewählten Punkten entsprechen, wobei sämtliche Koordinaten eine der Gruppen von N homologen Punkten bilden.

9. Extraktionsverfahren von homologen Punkten nach Anspruch 8, wobei die äußere Fläche der Objekte als Modellkonstruktion (701) in drei Dimensionen geschaffen wird mit Hilfe von Kanten und Spitzen, bei welchem für jedes der Q Objekte, die aus dem Schritt des Auswählens (702) der Objekte stammen, man die homologen Punkte aus den Spitzen auswählt (703).

10. Extraktionsverfahren von homologen Punkten nach Anspruch 8 oder 9, wobei ein erstes Modell eines der als Modell konstruierten realen Objekte anhand eines ersten Bildes erzeugt wird, ein zweites Modell desselben Objekts anhand eines zweiten Bildes erzeugt wird, wobei ein Schritt der Abstimmung der Spitzen eines jeden der beiden Modelle vor dem Schritt des Auswählens (703) der homologen Punkte ausgeführt wird.

11. Korrekturverfahren von Aufnahmemodellen in Verbund mit Bildern, bei welchem jedes Bild durch einen Sensor in der Luft oder im Raum in Verbund mit einem physischen Aufnahmemodell erzeugt wird, wobei das Verfahren die Ausführung des Extraktionsverfahrens von homologen Punkten nach einem der Ansprüche 8 bis 10 beinhaltet, gefolgt von einem Schritt der Korrektur der Aufnahmemodelle in Abhängigkeit von den Gruppen von extrahierten homologen Punkten.

**12.** System zum Neueinsteuern von Bildern, **dadurch gekennzeichnet, dass** es eine Rechenmaschine beinhaltet, welche konfiguriert ist, um das Verfahren nach einem der Ansprüche 8 bis 10 auszuführen.

**Claims**

**1.** A method for monoscopically extracting a real object represented in an image of the terrestrial surface, the method being implemented by a software executed on a calculation system, the image being referenced geographically and produced by an aerial or space sensor associated with a physical picture-capture model, the method being **characterised in that** it comprises at least the following steps:

- choosing a parametric model of the external surface of said real object (101);
- choosing (102) several initial suites of parameters of said parametric model and for each of said initial suites of parameters:

  ◦ projecting (103) the parametrized model into the image by applying the physical picture-capture model;
  ◦ evaluating, according to predefined radiometric criteria, the fit (104) between the projected model and the image;
  ◦ modifying the parameters by an optimization method based on said radiometric criteria, and repeating, with said parameters modified by the optimization, the method from the step of projecting (103) the model, until the optimal suite of parameters emanating from said initial suite of parameters is found, by using:

    • first an optimal fitting criterion between the radiometric homogeneity of the regions corresponding to the faces of the model projected into the image, and
    • second a radiometric fitting criterion of the contours of the model projected into the image with contours present in the image,

- determining, from among said optimal suites of parameters determined, the parameters of the model for which the fit is the best (106), so as to model said object with these parameters.

**2.** The monoscopic extraction method according to claim 1, wherein the initial suites of parameters are randomly selected.

**3.** The monoscopic extraction method according to claim 2, wherein each of the parameters is randomly selected according to a law having a uniform distribution in its domain of definition.

**4.** The method for monoscopically extracting several real objects represented in a geographically referenced image of the terrestrial surface, the image being produced by an aerial or space sensor, wherein the step of choosing the parametric model (101) is executed according to claim 1, and wherein several distinct domains of definition (301) are defined, for a subset of parameters, before executing the steps according to claim 1 of projection (103), of evaluating the fit (104) between the projected model and the image, and of determining the optimal parameters (106) on each of the previously defined domains of definition.

**5.** The monoscopic extraction method according to any of the previous claims, the method being implemented by a software executed on a calculation system provided with means of display and of interaction with a user, in which, after the step of choosing the parametric model (101) according to claim 1, a user defines, by using the interaction means, a domain of definition (201) for a subset of parameters, before executing the steps of projection (103), of evaluating the fit (104) between the projected model and the image, and of determining the optimal parameters (106) over the domain of definition defined previously by the user.

**6.** A method for detecting changes between two images of the same geographical zone captured at two different instants, the method comprising a first step (401) of executing the monoscopic extraction method according to any of the previous claims on each of the two images, and a second step of comparing (402) the models (441, 412) obtained on completion of the first step.

**7.** A system for monoscopically extracting a real object represented in an image of the terrestrial surface, the image being referenced geographically and produced by an aerial or space sensor, **characterised in that** the system comprises at least a calculation machine configured to execute the method according to any of claims 1 to 5.

**8.** A method for extracting at least one group of N homologous points on the basis of N aerial or space images referenced geographically, N≥2, the images representing one and the same zone of the terrestrial surface, the homologous points of the same group corresponding to the same geographical point in said zone, each of the homologous points of said group being defined by coordinates in a different image than the one of the other homologous points of the same group, the method comprising the following steps:

- for each of the N images, modelling (701), using the monoscopic extraction method according to any of claims 1 to 5, the external surface of K real objects represented in the image, K≥1;
- selecting from among the K real objects, the Q objects (702), Q≤K, said Q objects being the objects for which the N models created during the monoscopic extraction step are at a distance less than a predetermined level (702), the distance being the expression of the measurement of a similarity criterion between the N models,
- for each of said Q objects, choosing at least one point in each of the N models of this object (703), and determining in each of the N images, the coordinates corresponding to the chosen points, the set of said coordinates forming one of said groups of N homologous points.

**9.** The method for extracting homologous points according to claim 8, the external surface of the objects being modelled (701) in three dimensions by means of edges and vertices, in which for each of said Q objects emanating from the step of selecting (702) the objects, the homologous points are chosen (703) from among said vertices.

**10.** The method for extracting homologous points according to claim 8 or 9, a first model of one of the modelled real objects being generated on the basis of a first image, a second model of this same object being generated on the basis of a second image, wherein a step of matching the vertices of each of the two models is executed prior to the step of choosing (703) the homologous points.

**11.** The method for correcting picture-capture models associated with images, wherein each image is produced by an aerial or space sensor associated with a physical picture-capture model, the method comprising executing the method of extracting homolgous points according to any of claims 8 to 10, then a step of correcting said picture-capture models as a function of the groups of homologous points extracted.

**12.** A system for registering images, **characterised in that** it comprises a calculation machine configured to execute the method according to any of claims 8 to 10.

FIG.1

FIG.2

FIG.3

FIG.4

FIG.5a

FIG.5b

600

FIG.6

701

702

703

FIG.7

## RÉFÉRENCES CITÉES DANS LA DESCRIPTION

**Documents brevets cités dans la description**

- US 7733342 B

- US 7961982 B

**Littérature non-brevet citée dans la description**

- **DOMINIK BRUNNER et al.** Earthquake Damage Assessment of Buildings Using VHR Optical and SAR Imagery. *IEEE Geoscience and Remote Sensing Society,* Mai 2010, vol. 48 (5

- **HÉLÈNE SPORTOUCHE et al.** A Processing Chain for Simple 3D Reconstruction of Buildings in Urban Scenes From High Resolution Optical and SAR Images. *8th European Conférence on Synthetic Aperture Radar,* 07 Juin 2010